# EUROPÄISCHE PATENTSCHRIFT

(11) **EP 3 755 610 B1**
(45) Veröffentlichungstag und Bekanntmachung des Hinweises auf die Patenterteilung: **11.01.2023**
(21) Anmeldenummer: 19702225.4
(22) Anmeldetag: 24.01.2019
(51) Int. Cl.: B62J 1/22, B62J 1/26

(54) **FAHRRADSATTEL**
BICYCLE SADDLE
SELLE DE BICYCLETTE

(30) Priorität: 22.02.2018 DE 202018000943 U
(43) Veröffentlichungstag der Anmeldung: 30.12.2020
(73) Patentinhaber: Ergon International GmbH, 56070 Koblenz (DE)
(72) Erfinder: KRAUSE, Andreas, 56068 Koblenz (DE); ARNOLD, Franc, 56068 Koblenz (DE)
(74) Vertreter: dompatent von Kreisler Selting Werner - Partnerschaft von Patent- und Rechtsanwälten mbB
(86) Internationale Anmeldenummer: PCT/EP2019/051708
(87) Internationale Veröffentlichungsnummer: WO 2019/162030

(56) Entgegenhaltungen:
- EP-A1- 1 024 992
- CN-Y- 2 245 020
- DE-U1- 9 108 143
- JP-A- 2003 127 931
- JP-U- S58 152 475
- US-A- 5 203 607
- US-A1- 2011 193 376

## Beschreibung

Die Erfindung betrifft einen Fahrradsattel.

Fahrradsättel weisen eine Sattelschale auf, an deren Unterseite üblicherweise ein Sattelgestell zur Verbindung mit einer Sattelstütze vorgesehen ist. Die Oberseite der Sattelschale ist mit einem Sattelpolster verbunden. Da das Polster üblicher Weise aus aufgeschäumtem Material wie PU-Schaum hergestellt ist, ist es erforderlich, das Sattelpolster mit einer Deckschicht zu überspannen. Dies ist insbesondere erforderlich, da das Sattelpolster ansonsten Feuchtigkeit aufnehmen würde und ferner die Widerstandsfähigkeit des Polstermaterials gering ist. Die Deckschicht ist üblicherweise ein dünnes Kunststoffmaterial, mit einer Dicke von 0,5-1,5mm. Die Deckschicht überspannt das Sattelpolster und wird an der Unterseite der Sattelschale entlang des gesamten Sattelrandes üblicherweise durch kleben fixiert. Es ist fertigungstechnisch erforderlich die Kante der Deckschicht von Hand abzuschneiden.

Aus US 5,203,607 ist ein Fahrradsattel mit den Merkmalen des Oberbegriffs des Anspruchs 1 bekannt, wobei ein oberes Polsterelement als Wabenstruktur ausgebildet ist, die von einer Umhüllung vollständig umgeben ist.

Aufgabe der Erfindung ist es einen Fahrradsattel zu schaffen, bei dem das Anordnen der Deckschicht vereinfacht ist.

Die Lösung der Aufgabe erfolgt erfindungsgemäß durch einen Fahrradsattel gemäß Anspruch 1.

Der erfindungsgemäße Fahrradsattel weist eine Sattelschale auf, an deren Unterseite ein Sattelgestell oder eine entsprechende Verbindung zwischen der Sattelschale und dem Sattelstützrohr vorgesehen ist. An einer Oberseite der Sattelschale ist ein Sattelpolster angeordnet. Das Sattelpolster ist von einer Deckschicht überspannt. Erfindungsgemäß weist das Sattelpolster mindestens zwei Polsterelemente auf. Die Polsterelemente können unterschiedliche Dämpfungseigenschaften, unterschiedliche Rebound-Eigenschaften, unterschiedliche Härten und dergleichen aufweisen. Die Polsterelemente sind derart angeordnet bzw. ausgebildet, dass sie sich zumindest in Teilen überdecken. Insbesondere ist eine Überdeckung zumindest in Teilen am Sattelrand vorgesehen. Der Sattelrand ist der umlaufende Randbereich des Sattels. Durch eine Überdeckung von zwei oder mehr Polsterelementen in dem Bereich des Sattelrandes ist es möglich, einen Randbereich der Deckschicht am Sattelrand zwischen den beiden sich überdeckenden Polsterelementen anzuordnen. Dies hat den Vorteil, dass die Kante der Deckschicht nicht sichtbar ist. Insofern ist es nicht mehr erforderlich eine saubere Schnittkante oder Abschlusskante der Deckschicht herzustellen.

Eine derartige Überdeckung von zwei Polsterelementen zwischen denen sodann der Randbereich der Deckschicht angeordnet ist, ist in besonders bevorzugter Ausführungsform umlaufend am gesamten Sattelrand vorgesehen, sodass der gesamte Randbereich der Deckschicht bzw. die Kante der Deckschicht zwischen zwei Polsterelementen angeordnet und somit nicht sichtbar ist. Gegebenenfalls können jedoch auch nur Teile des Randbereichs der Deckschicht zwischen zwei Polsterelementen angeordnet sein, wobei andere Teile der Deckschicht sodann ggf. wie üblich an der Sattelunterseite fixiert sind. Bevorzugt ist jedoch, dass der gesamte Randbereich der Deckschicht zwischen Polsterelementen angeordnet ist.

Um ein möglichst gutes Fixieren bzw. Halten der Deckschicht zwischen den Polsterelementen zu realisieren weist erfindungsgemäß eines der beiden Polsterelemente am Sattelrand einen Ansatz auf, der in eine Ausnehmung des anderen Polsterelements ragt. Hierdurch kann ein besseres Einklemmen bzw. Fixieren des Randbereichs der Deckschicht realisiert werden.

Bevorzugt ist es, dass der Ansatz an einem unteren Polsterelement d.h. einem Polsterelement das in Richtung der Sattelschale weist und an dessen von der Sattelschale wegweisenden Oberseite vorgesehen ist. Bei montiertem Fahrradsattel weist der Ansatz somit nach oben. Besonders bevorzugt ist es, dass dieses Polsterelement mit der Sattelschale beispielsweise durch Verkleben oder während des Herstellungsprozesses des Sattels durch Wärme oder chemische Reaktionen verbunden ist.

Des Weiteren ist es bevorzugt, dass der Ansatz derart an dem Polsterelement angeordnet ist, dass eine Außenseite des Ansatzes sichtbar ist. Insbesondere wenn es sich bei dem Polsterelement um das untere Polsterelement handelt, ist die Außenseite des Ansatzes sodann sichtbar und nicht von der Deckschicht überdeckt. Insofern ist das Material des insbesondere unteren Polsterelements sichtbar und hat zusätzlich eine Designfunktion. Der Ansatz entspricht somit einem erhöhten Rand des entsprechenden Polsterelements.

Es ist des Weiteren bevorzugt, dass auch die Ausnehmung in Richtung einer Außenseite des Fahrradsattels offen ist. Die Ausnehmung entspricht somit einer Stufe im Randbereich des Polsterelements.

In besonders bevorzugter Ausführungsform ist sowohl der Ansatz als auch die Ausnehmung vollständig umlaufend d.h. am gesamten Sattelrand vorgesehen.

Des Weiteren ist es besonders bevorzugt, dass die Deckschicht an einer Oberseite des Ansatzes, insbesondere an der gesamten Oberseite des Ansatzes d.h. über die gesamte Fläche der Oberseite, an dieser anliegt. Die Oberseite des Ansatzes ist die in Richtung des die Ausnehmung aufweisenden anderen Polsterelements weisende Seite des Ansatzes. Hierdurch kann eine gute Fixierung der Deckschicht realisiert werden.

Zur weiteren Verbesserung der Fixierung der Deckschicht ist es besonders bevorzugt, dass diese auch zumindest an einem Teil der Innenseite des Ansatzes anliegt. Die Innenseite des Ansatzes ist hierbei die in Richtung des Inneren des Sattels weisende Seite des Ansatzes. Hierdurch ist die Deckschicht zweifach gekrümmt, sodass die Fixierung weiter verbessert ist.

Der Ansatz weist vorzugsweise eine Breite von 3 bis 20mm insbesondere 5 bis 10mm auf. Die Breite des Ansatzes erstreckt sich hierbei senkrecht zum Sattelrand in Richtung des Sattelinneren.

Bei einer weiteren bevorzugten Ausführungsform ist ein unteres Polsterelement derart ausgebildet, dass es die Oberseite der Sattelschale um mindestens 50%, insbesondere mindestens 70% und besonders bevorzugt vollständig bedeckt. Gegebenenfalls kann ein weiteres d.h. ein drittes oder gar ein viertes Polsterelement vorgesehen sein um die Dämpfungseigenschaften, Rebound-Eigenschaften etc. des Sattelpolsters zu verändern. Dies kann insbesondere für den Bereich der Sitzknochen, im Bereich der Sattelspitze oder anderen besonderen Belastungen ausgesetzten Bereichen vorteilhaft sein. Beispielsweise können als weitere Polsterelemente Gelelemente oder dergleichen vorgesehen sein.

Für eine weitere bevorzugte Ausführungsform ist ein oberes Polsterelement derart angeordnet und ausgebildet, dass es das untere Polsterelement zumindest 50% insbesondere mindestens 70% und vorzugsweise vollständig überdeckt. Auch ist es möglich, dass das untere Polsterelement die Oberseite der Sattelschale nur teilweise überdeckt und sodann das obere Polsterelement derart ausgebildet ist, dass es in Draufsicht die gesamte Oberseite der Sattelschale überdeckt. Es kann insofern Bereiche geben, in denen das Sattelpolster mehrlagig ist, sowie es auch Bereiche geben kann in denen das Sattelpolster nur einlagig ist. Zumindest in den einlagigen Bereichen ist es bevorzugt, dass die Deckschicht wie üblich an der Unterseite der Sattelschale fixiert wird.

In besonders bevorzugter Ausführungsform ist das insbesondere untere Polsterelement als Elastomerkörper ausgebildet. Insbesondere weist der Elastomerkörper einen offenzelligen oder geschlossenzelligen Schaum auf und ist besonders bevorzugt aus einem derartigen Schaum hergestellt.

Insbesondere sind geschlossenporige Schäume bevorzugt. Besonders bevorzugt ist es, dass insbesondere das untere Polsterelement einen oder mehrere Partikelschäume aufweist und insbesondere aus einem oder mehreren Partikelschäumen hergestellt ist. Als Grundmaterial sind hierbei E-TPU (expandiertes thermoplastisches Polyurethan), EPP (expandiertes Polypropylen), EPS (expandiertes Polysterol), EPE (expandiertes Polyethylen) oder ähnliche Schäume besonders bevorzugt. Partikelschäume bestehen hierbei in der Regel aus kleinen Kügelchen des expandierten Grundmaterials. Diese als Kügelchen oder andere Körper geformten Partikel werden in einem Werkzeug wie einer Form oder dergleichen unter Temperatur, ggf. auch unter Wasserdampf in ihre Endform gebracht. Partikelschäume haben insbesondere den Vorteil, dass sie eine geringe Dichte, eine gute Wärme-/Kälteisolation und gute Dämpfungseigenschaften aufweisen.

Besonders bevorzugt weist das untere Polsterelement bzw. das Hauptpolsterelement E-TPU (expandiertes thermoplastisches Polyurethan) auf und ist besonders bevorzugt aus diesem Material hergestellt. Besonders geeignet ist hierfür das von der Firma BASF unter dem Produktnamen "Infinergy" hergestellte Material. Verfahren zur Herstellung von E-TPU sind beispielsweise in EP 692510, WO 00/44821, EP 1174459 und EP 1174458 beschrieben. Ferner ist es bevorzugt, das Polsterelement aus EVA (Ethylenvinylacetat) herzustellen, oder das Hauptpolsterelement aus Material herzustellen, das EVA aufweist. Ferner sind als Materialien EPP (expandiertes Polypropylen), TPE (thermoplastisches Elastomer) oder E-TPE (expandiertes thermoplastisches Elastomer), EPS (expandiertes Polystyrol) und EPE (expandiertes Polyethylen) verwendbar. Auch eine Kombination dieser Materialien miteinander oder eine Kombination der Materialien mit anderen Materialien ist möglich, zum Beispiel in einem Mehrschichtaufbau. Insbesondere können auch Mischungen mit Co- oder Terpolymeren eingesetzt werden. Hierdurch können unterschiedliche Dämpfungs- und Bewegungseigenschaften des Elastomer-Körpers erzielt werden. Auch ist es möglich, die entsprechenden Materialien in unterschiedlichen Bereichen stärker zu verdichten, so dass hierdurch die Dämpfungs- und Bewegungseigenschaft beeinflusst werden können.

Ein weiteres gut geeignetes Material zur Ausbildung des insbesondere unteren Polsterelements ist ein Polyester-basiertes PU Material. Besonders geeignet ist hierbei das von der Firma BASF unter dem Markennamen "Elastopan" angebotene Material. Vorzugsweise weist das Polsterelement ein derartiges Material auf oder ist aus diesem hergestellt, wobei es wiederum möglich ist, dieses Material mit anderen beschriebenen Materialien zu kombinieren.

Besonders bevorzugt ist es, dass insbesondere das untere Polsterelement einen oder mehrere Partikelschäume aufweist und insbesondere aus einem oder mehreren Partikelschäumen hergestellt ist. Als Grundmaterial sind hierbei E-TPU (expandiertes Polyurethan), EPP (expandiertes Polypropylen), EPS (expandiertes Polystyrol), EPE (expandiertes Polyethylen) oder ähnliche Schäume besonders bevorzugt. Partikelschäume bestehen hierbei in der Regel aus kleinen Kügelchen des expandierten Grundmaterials. Diese als Kügelchen oder andere Körper geformten Partikel werden in einem Werkzeug wie einer Form oder dergleichen unter Temperatur, ggf. auch unter Wasserdampf in ihre Endform gebracht. Partikelschäume haben insbesondere den Vorteil, dass sie eine geringe Dichte, eine gute Wärme-/Kälteisolation und gute Dämpfungseigenschaften aufweisen.

Das untere Polsterelement ist vorzugsweise zumindest im Randbereich aus feuchtigkeitsabweisendem Material hergestellt.

Das insbesondere untere Polsterelement weist in besonders bevorzugter Ausführungsform ein Elastizitätsmodul von 0,1 bis 10 MPA, insbesondere 0,1 bis 5 MPA und besonders bevorzugt 0,1 bis 1,0 MPA auf. Das besonders bevorzugte Material "Infinergy E-TPU" weist ein Elastizitätsmodul von 0,1 bis 0,5 MPA auf.

Des Weiteren ist es besonders bevorzugt, dass das insbesondere untere Polsterelement auf Grund seiner geringen Dichte ein geringes Gewicht aufweist. Insbesondere weist der Elastomerkörper eine Dichte von weniger als 1 g/cm³ , besonders bevorzugt weniger als 0,5 g/cm³, und insbesondere weniger als 0,2 g/cm³ auf. Eines der besonders bevorzugten Materialien, das Material Elastil, weist eine Dichte im Bereich von 0,05 bis 0,2 g/cm³ auf.

Das Rebound-Verhalten des insbesondere unteren Polsterelements liegt vorzugsweise im Bereich von mehr als 30%, insbesondere mehr als 40% und besonders bevorzugt mehr als 50%.

Das obere Polsterelement überdeckt das untere Polsterelement zumindest teilweise, vorzugsweise vollständig. Insbesondere bedeckt das obere Polsterelement das untere Polsterelement um mindestens 50%, insbesondere mindestens 70% und besonders bevorzugt vollständig.

Das obere Polsterelement ist vorzugsweise aus einem schäumbaren Material, insbesondere geschäumten Kunststoff hergestellt. Besonders geeignet ist PU-Schaum.

Die Sattelschale weist als Material vorzugsweise PP, PA6, oder PA12 auf oder ist aus diesem Material hergestellt. Das Elastizitätsmodul der Sattelschale liegt erfindungsgemäß im Bereich von 1000 bis 10000 MPA, vorzugsweise im Bereich von 2500 bis 6000 MPA und besonders bevorzugt im Bereich von 3000 bis 5000 MPA. Bevorzugt ist die Verwendung von PP (E-Modul: 1100 bis 1450 MPA), PP GF20 (E-Modul ca. 2900 MPA) und/oder PA 6 GF 15 (E-Modul 4500 bis 6500 MPA).

Des Weiteren kann die Sattelschale auch aus TPU hergestellt sein. TPU weist insbesondere den Vorteil auf, dass in einer großen Bandbreite unterschiedliche Elastizitätsmodule erzielt werden können. Die Elastizitätsmodule liegen insbesondere zwischen 500-6000 MPA.

Des Weiteren kann die Sattelschale auch aus Kombinationen vorstehende Werkstoffe oder auch in Verbindung mit anderen Werkstoffen hergestellt sein.

Nachfolgend wird die Erfindung anhand bevorzugter Ausführungsformen unter Bezugnahme auf die anliegenden Zeichnungen näher erläutert.

Es zeigen:
- Figur 1: eine schematische Draufsicht eines Fahrradsattels,
- Figur 2: eine schematische Seitenansicht des in Figur 1 dargestellten Fahrradsattels,
- Figur 3: eine schematische Schnittansicht entlang der Linie III-III in Figur 1,
- Figur 4: eine erste bevorzugte Ausführungsform des Randbereichs des Fahrradsattels, wobei es sich um eine Vergrößerung des Bereichs X in Figur 4 handelt und
- Figur 5: eine zweite bevorzugte Ausführungsform des Randbereichs des Fahrradsattels, wobei es sich um eine Vergrößerung des Bereichs X in Figur 3 handelt.

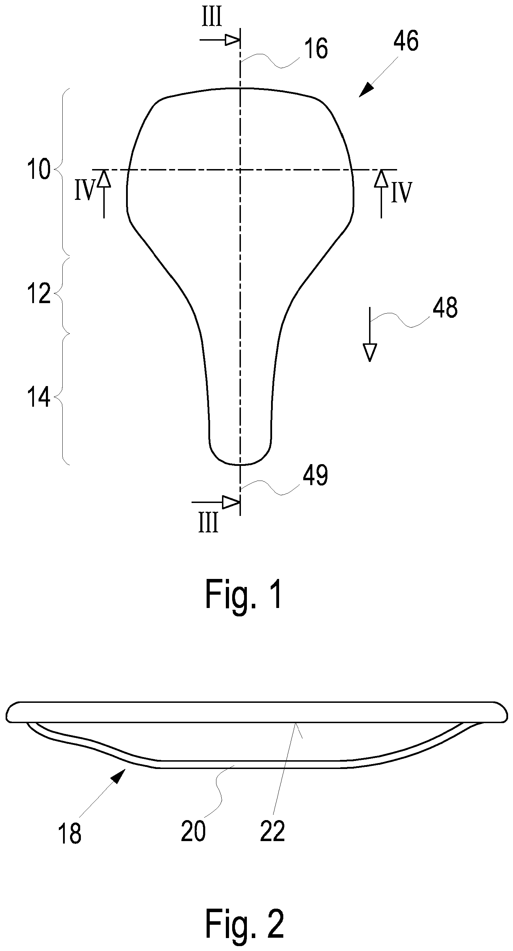

Ein Fahrradsattel weist in Draufsicht (Figur 1) einen Sitzbereich 10 auf, an dem sich ein Mittelbereich 12 anschließt. Der Mittelbereich 12 geht in die Sattelspitze 14 über. Hierbei ist die Sattelspitze 14 schmaler ausgebildet und der Sitzbereich 12 breiter ausgebildet, sodass im Sitzbereich der größte Teil des Gewichts des Fahrrades insbesondere über die Sitzknochen aufgenommen wird. Der Fahrradsattel ist zu einer Mittelachse 16 die in Längsrichtung verläuft symmetrisch ausgebildet.

Eine Unterseite 22 des Fahrradsattels ist mit einem Sattelgestell 18 (Figur 2) verbunden. Die dargestellte Ausführungsform des Sattelgestells 18 weist insbesondere zwei sich im Wesentlichen in Längsrichtung des Sattels erstreckende Streben auf. In einem mittleren Bereich 20 der beiden Streben des Sattelgestells 18 ist dieses über ein Befestigungselement mit der Sattelstütze verbindbar. Selbstverständlich sind auch andere Befestigungen des Sattels mit der Sattelstütze möglich.

Der erfindungsgemäße Sattel weist eine aus relativ steifem Material hergestellte Sattelschale 24 auf, mit deren Unterseite 22 das Sattelgestell 18 verbunden ist. Auf einer Oberseite 26 der Sattelschale 24 ist ein Sattelpolster 28 angeordnet. Im dargestellten Ausführungsbeispiel weist das Sattelpolster 28 ein unteres Polsterelement 30 sowie ein oberes Polsterelement 32 auf. Im dargestellten Ausführungsbeispiel bedeckt das untere Polsterelement 30 die gesamte Oberseite 26 der Sattelschale 24. Des Weiteren bedeckt das obere Polsterelement 32 über die gesamte Fläche eine Oberseite 34 des unteren Polsterelements 30.

Ferner ist eine Oberseite des oberen Polsterelements 32 mit einer Deckschicht 36 überspannt. Der Randbereich 38 der Deckschicht 36 ist im Bereich eines Sattelrandes 40 zwischen den beiden Polsterelementen 30, 32 angeordnet.

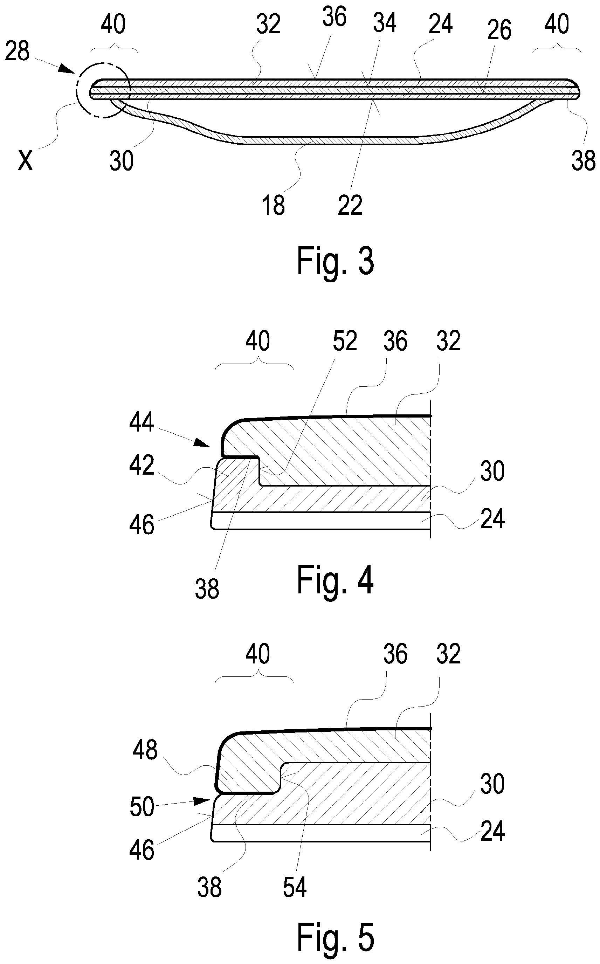

Zwei unterschiedliche Ausführungsformen dieses Bereiches sind als Vergrößerung X in den Figuren 4 und 5 dargestellt.

Bei der ersten bevorzugten Ausführungsform (Figur 4) weist das untere Polsterelement 30 einen Ansatz 42 auf. Der Ansatz ragt bezogen auf die Sattelschale 24 nach oben bzw. von dieser weg. Entsprechend weist das obere Polsterelement 32 eine zu dem Ansatz 42 komplementär ausgebildete Ausnehmung 44 auf. Die Deckschicht 36 ist um eine in Figur 4 nach links weisende Außenseite des oberen Polsterelements 32 herumgeführt, wobei der Randbereich 38 der Deckschicht zwischen den beiden Polsterelementen 30, 32 im Bereich des Ansatzes 42 bzw. der Ausnehmung 44 angeordnet ist. Eine Außenseite 46 des unteren Polsterelements 32 ist somit sichtbar.

Bei der in Figur 5 dargestellten Ausführungsform ist die Ausgestaltung des Ansatzes und der Ausnehmung umgekehrt zu der in Figur 4 dargestellten Ausführungsform. Dementsprechend weist das obere Polsterelement 32 einen Ansatz 48 auf, der in eine entsprechend komplementäre Ausbildung 50 des unteren Polsterelements 30 ragt. Der Randbereich 38 der Deckschicht 36 ist wiederum im Bereich des Sattelrandes 40 zwischen den beiden Polsterelementen angeordnet. Eine Außenseite 46, die in dem in Figur 5 dargestellten Ausführungsbeispiel eine geringere Höhe aufweist als in dem in Figur 4 dargestellten Ausführungsbeispiel ist wiederum sichtbar.

Vorzugsweise weist eine Breite der Ansätze 42, 48 sowie auch der Ausnehmungen 44, 50 im Bereich des Sattelrandes entsprechend der Schnittansicht in Figuren 4 und 5 3mm bis 20mm, insbesondere 5mm bis 10mm auf.

Der Randbereich 38 der Deckschicht 36 ist vorzugsweise umlaufend um den gesamten Sattelrand und im Wesentlichen gleich ausgebildet, sodass der Randbereich 38 der Deckschicht 36 stets zwischen den beiden Polsterelementen 30, 32 angeordnet ist.

Der Randbereich 38 der Deckschicht 36 kann einerseits an der Oberseite des entsprechenden Ansatzes 42, 48 anliegen und ggf. zusätzlich an einer Innenseite 52, 54 des Ansatzes 42 bzw. 48 anliegen.

## Patentansprüche

1. Fahrradsattel mit
einer Satteschale (24),
einem an einer Unterseite (22) der Sattelschale (24) angeordneten Sattelgestell (18),
einem an einer Oberseite (26) der Sattelschale (24) angeordneten Sattelpolster (28) und
einer das Sattelpolster (28) überspannenden Deckschicht (36),
wobei das Sattelpolster (28) mindestens zwei Polsterelemente (30, 32) aufweist, die sich zumindest in Teilen eines Sattelrandes (40) überdecken und
wobei ein Randbereich (38) der Deckschicht (36) am Sattelrand (40), an dem sich mindestens zwei Polsterelemente (30, 32) überdecken zwischen den Polsterelementen (30, 33) angeordnet ist,
**dadurch gekennzeichnet,**
**dass** eines der Polsterelemente (30), (32) am Sattelrand (40) einen Ansatz (42), (48) aufweist, der in eine Ausnehmung (44), (50) des anderen Polsterelements (30, 32) ragt.

2. Fahrradsattel nach Anspruch 1 **dadurch gekennzeichnet, dass** der Ansatz (42) an einem unteren in Richtung der Sattelschale (24) weisenden Polsterelement (30) vorgesehen ist, wobei das untere Polsterelement (30) vorzugsweise mit der Oberseite (26) der Sattelschale (24) verbunden ist.

3. Fahrradsattel nach Anspruch 1 oder 2 **dadurch gekennzeichnet, dass** der Ansatz (42, 48) eine insbesondere sichtbare Außenseite (46) aufweist.

4. Fahrradsattel nach einem der Ansprüche 1 bis 3 **dadurch gekennzeichnet, dass** die Ausnehmung (44, 50) in Richtung einer Außenseite des Fahrradsattel offen ist.

5. Fahrradsattel nach einem der Ansprüche 1 bis 4 **dadurch gekennzeichnet, dass** sich der Ansatz (42, 48) in Umfangsrichtung des Sattelrandes (40) insbesondere vollständig erstreckt.

6. Fahrradsattel nach einem der Ansprüche 1 bis 5 **dadurch gekennzeichnet, dass** die Deckschicht (36) an einer Oberseite des Ansatzes (42, 48) insbesondere der gesamten Oberseite des Ansatzes (42, 48) anliegt.

7. Fahrradsattel nach Anspruch 6 **dadurch gekennzeichnet, dass** die Deckschicht (36) an einer Innenseite des Ansatzes (42, 48) anliegt.

8. Fahrradsattel nach einem der Ansprüche 1 bis 7 **dadurch gekennzeichnet, dass** der Ansatz (42, 48) eine Breite von 3 bis 20mm, insbesondere von 5 bis 10mm aufweist.

9. Fahrradsattel nach einem der Ansprüche 1 bis 8 **dadurch gekennzeichnet, dass** ein unteres Polsterelement (32) die Oberseite (26) der Sattelschale (24) vollständig bedeckt.

10. Fahrradsattel nach einem der Ansprüche 1 bis 9 **dadurch gekennzeichnet, dass** ein oberes Polsterelement (32) ein unteres Polsterelement (30) vollständig bedeckt.

11. Fahrradsattel nach einem der Ansprüche 1 bis 10 **dadurch gekennzeichnet, dass** zumindest eines der Polsterelemente (30, 32) insbesondere das untere Polsterelement (30) einen Partikelschaum aufweist, insbesondere aus einem Partikelschaum hergestellt ist.

12. Fahrradsattel nach einem der Ansprüche 1 bis 11 **dadurch gekennzeichnet, dass** das Material des unteren Polsterelements (30) feuchtigkeitsabweisend ist.

## Claims

1. Bicycle saddle comprising
a saddle shell (24),
a saddle frame (18) arranged on a lower side (22) of the saddle shell (24),
a saddle cushion (28) arranged on the upper side (26) of the saddle shell (24), and
a cover layer (36) spanning the saddle cushion (28),
wherein the saddle cushion (28) comprises at least two cushion elements (30, 32) overlapping each other at least in parts of a saddle edge (40),
wherein at the saddle edge (40), where at least two cushion elements (30, 32) overlap each other, an edge region (38) of the cover layer (36) is arranged between the cushion elements (30, 32),
**characterized in**
**that** one of the cushion elements (30), (32) has a protrusion (42), (48) at the saddle edge (40), which protrusion protrudes into a recess (44), (50) of the other cushion element (30, 32).

2. Bicycle saddle of claim 1, **characterized in that** the protrusion (42) is provided on a lower cushion element (30) that is directed towards the saddle shell (24), wherein the lower cushion element (30) is connected preferably to the upper side (26) of the saddle shell (24).

3. Bicycle saddle of claim 1 or 2, **characterized in that** the protrusion (42, 48) comprises an in particular visible outer side (46).

4. Bicycle saddle of one of claims 1 to 3, **characterized in that** the recess (44, 50) is open towards an outer side of the bicycle saddle.

5. Bicycle saddle of one of claims 1 to 4, **characterized in that** the protrusion (42, 48) extends in particular completely in the circumferential direction of the saddle edge (40).

6. Bicycle saddle of one of claims 1 to 5, **characterized in that** the cover layer (36) rests on an upper side of the protrusion (42, 48), in particular on the entire upper side of the protrusion (42, 48).

7. Bicycle saddle of claim 6, **characterized in that** the cover layer (36) rests on an inner side of the protrusion (42, 48).

8. Bicycle saddle of one of claims 1 to 7, **characterized in that** the protrusion (42, 48) have a width of 3 to 20 mm, in particular 5 to 10 mm.

9. Bicycle saddle of one of claims 1 to 8, **characterized in that** a lower cushion element (32) covers all of the upper side (26) of the saddle shell (24).

10. Bicycle saddle of one of claims 1 to 9, **characterized in that** an upper cushion element (32) covers all of a lower cushion element (30).

11. Bicycle saddle of one of claims 1 to 10, **characterized in that** at least one of the cushion elements (30, 32), in particular the lower cushion element (30), comprises a particle foam and, in particular, is made of a particulate foam.

12. Bicycle saddle of one of claims 1 to 11, **characterized in that** that the material of the lower cushion element (30) is moisture-repellent.

## Revendications

1. Selle de bicyclette avec
une coque de selle (24),
un support de selle (18) disposé à la face inférieure de la coque de selle (24),
un coussin de selle (28) disposé à la face supérieure de la coque de selle (24) et
une couche de couverture (36) recouvrant le coussin de selle (28),
le coussin de selle comprenant au moins deux éléments de rembourrage (30, 32) qui se chevauchent au moins sur des parties d'un bord de selle (40) et
une zone de bord (38) de la couche de couverture (36) étant disposée au bord de selle (40), auquel au moins deux éléments de rembourrage (30, 32) se chevauchent, entre les éléments de rembourrage (30, 32),
**caractérisée en ce**
**qu'**un des éléments de rembourrage (30), (32) comprend une saillie (42), (48) qui s'étend jusque dans un évidement (44), (50) de l'autre élément de rembourrage (30, 32).

2. Selle de bicyclette selon la revendication 1, **caractérisée en ce que** la saillie (42) est prévue à un élément de rembourrage (30) inférieur dirigé en direction de la coque de selle (24), l'élément de rembourrage (30) inférieur étant de préférence relié à la face supérieure (26) de la coque de selle (24).

3. Selle de bicyclette selon la revendication 1 ou 2, **caractérisée en ce que** la saillie (42, 48) comprend un côté extérieur notamment visible.

4. Selle de bicyclette selon l'une des revendications 1 à 3, **caractérisée en ce que** l'évidement (44, 50) est ouvert en direction d'une face extérieure de la selle de bicyclette.

5. Selle de bicyclette selon l'une des revendications 1 à 4, **caractérisée en ce que** la saillie (42, 48) s'étend notamment complètement en direction périphérique du bord de selle (40).

6. Selle de bicyclette selon l'une des revendications 1 à 5, **caractérisée en ce que** la couche de couverture (36) est en appui sur une face supérieure de la saillie (42, 48), notamment sur la face entière supérieure de la saillie (42, 48).

7. Selle de bicyclette selon la revendication 6, **caractérisée en ce que** la couche de couverture (36) est en appui sur une face intérieure de la saillie (42, 48).

8. Selle de bicyclette selon l'une des revendications 7, **caractérisée en ce que** la saillie (42, 48) a une largeur de 3 à 20 mm, notamment de 5 à 10 mm.

9. Selle de bicyclette selon l'une des revendications 1 à 8, **caractérisée en ce qu'**un élément de rembourrage (32) inférieur recouvre complètement la face supérieure (26) de la coque de selle (24).

10. Selle de bicyclette selon l'une des revendications 1 à 9, **caractérisée en ce qu'**un élément de rembourrage supérieur (32) recouvre complètement un élément de rembourrage inférieur (30).

11. Selle de bicyclette selon l'une des revendications 1 à 10, **caractérisée en ce qu'**au moins un des éléments de rembourrage (30, 32), notamment l'élément de rembourrage inférieur (30), comprend une mousse particulaire, notamment est fabriquée à partir d'une mousse particulaire.

12. Selle de bicyclette selon l'une des revendications 1 à 11, **caractérisée en ce que** le matériau de l'élément de rembourrage inférieur (30) est hydrofuge.
